Europäisches Patentamt

European Patent Office

Office européen des brevets

(11) Veröffentlichungsnummer: **0 266 722 B1**

(12) **EUROPÄISCHE PATENTSCHRIFT**

(45) Veröffentlichungstag der Patentschrift: **12.08.92**

(21) Anmeldenummer: **87116083.4**

(22) Anmeldetag: **02.11.87**

(51) Int. Cl.⁵: **A01C 7/04**, A01C 7/08

(54) **Verfahren und Vorrichtung zum Säen von vereinzelten Samen in eine von einem Schar gezogene Furche.**

(30) Priorität: **04.11.86 DE 3637530**

(43) Veröffentlichungstag der Anmeldung:
**11.05.88 Patentblatt 88/19**

(45) Bekanntmachung des Hinweises auf die
Patenterteilung:
**12.08.92 Patentblatt 92/33**

(84) Benannte Vertragsstaaten:
**AT CH FR GB IT LI NL SE**

(56) Entgegenhaltungen:
**EP-A- 0 071 954     DE-A- 2 847 514**
**FR-A- 548 059      FR-A- 988 074**
**FR-A- 1 229 027     FR-A- 1 284 678**
**FR-A- 2 291 927**

**SOVIET INVENTIONS ILLUSTRATED, Derwent**
**Publications Ltd, London, GB; & SU-A-181**
**415 (PAKHOMOV et al.) 03-05-1965**

(73) Patentinhaber: **PAUL, Karl-Heinz**
**Zur Wilde 8**
**W-3590 Bad Wildungen-Wega(DE)**

(72) Erfinder: **PAUL, Karl-Heinz**
**Zur Wilde 8**
**W-3590 Bad Wildungen-Wega(DE)**

(74) Vertreter: **Rehberg, Elmar, Dipl.-Ing.**
**Postfach 3162 Am Kirschberge 22**
**W-3400 Göttingen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Säen von vereinzelten Samen in eine von einem Schar gezogene Furche, in dem der vereinzelte Samen in einer Leiteinrichtung geführt, im Bereich des Schares gefangen, kurzzeitig zwischengelagert und dann in die Furche abgegeben wird. Die Erfindung zeigt gleichzeitig eine Sävorrichtung mit einer Vereinzelungseinrichtung für die Samen, einer Leiteinrichtung und einem Schar, wobei im Schar im Bereich des Endes der Leiteinrichtung eine Einrichtung zum Auffangen der in der Leiteinrichtung bewegten Samen und zum Ablegen der Samen in die von dem Schar gezogene Furche vorgesehen ist.

Ein Verfahren und eine Vorrichtung der eingangs beschriebenen Art sind aus der US-A-3 303 801 bekannt. Dabei gelangt der Samen aus einer Vereinzelungseinrichtung in eine als Fallrohr ausgebildete Leiteinrichtung, in der er nach unten geführt wird. Unterhalb des Endes des Fallrohres ist eine Einrichtung zum Auffangen der bewegten Samen angeordnet, die im wesentlichen aus einer V-förmig gebogenen Sammelrinne besteht, der ein ortsfest angeordneter Abstreifer zugeordnet ist. Die V-förmige Sammelrinne ist taktweise relativ zu dem Abstreifer hin- und herbeweglich angeordnet und wird synchron mit der Vereinzelungseinrichtung angetrieben. Die Sammelrinne verbleibt solange unter dem Ende der Leiteinrichtung, bis mindestens zwei Samen aufgefangen und zwischengelagert wurden. Sodann wird dieser Samen durch die Relativbewegung zwischen Sammelrinne und Abstreifer zum Herabfallen in die Furche freigegeben. Der Samen wird damit immer zu mehreren horstweise im freien Fall in die Furche gebracht. Da die V-förmige Sammelrinne nach oben und vorn offen ist, besteht die Gefahr, daß die Samenkörner beim Auftreffen auf die Sammelrinne oder beim Auftreffen auf bereits in der Sammelrinne liegende Körner verspringen, also neben der Rinne zu einem nicht gewünschten Zeitpunkt herabfallen, so daß dann die Ablegung im Horst mit entsprechender Minderzahl erfolgt und das versprungene Korn auf der Strecke zwischen zwei benachbarten Horsten irgendwo abgelegt wird. Auch besteht durch das Ablegen der Samenkörner im freien Fall die Gefahr des Verrollens in der Furche. Die in der Sammelrinne gesammelten Samenkörner werden in der Regel nacheinander im freien Fall abgegeben, wobei der Abwurf so erfolgt, daß das einzelne Samenkorn noch eine Bewegungskomponente in Fahrtrichtung aufweist, die der Fahrgeschwindigkeit der Sämaschine entspricht. Die Einrichtung zum Auffangen und Zwischenlagern der Samen ist hier rein mechanisch ausgebildet, so daß auch entsprechende Verschleiß- und Verschmutzungsprobleme auftreten können.

Die EP-A-37 775 zeigt eine Sävorrichtung mit einer Lochscheibe, an der die Samen pneumatisch durch Unterdruck vereinzelt werden. An einer Übergabestelle für die vereinzelten Samen ist ein Venturirohr vorgesehen, welches an der Übergabestelle eine Öffnung für den Eintritt der Samen von der Lochscheibe in das Venturirohr aufweist und welches an eine Druckluftquelle angeschlossen ist. Die Achse des Venturirohres kann in ihrer Neigung an die Fahrgeschwindigkeit der Sävorrichtung so angepaßt werden, daß der einzelne Samen durch die Druckluft senkrecht nach unten beschleunigt und abgelegt wird. Eine Zwischenlagerung des Samens nach der Lochscheibe findet nicht statt. Der einzelne Samen wir somit aus vergleichsweise relativ großer Höhe beschleunigt abgeworfen. Beim Übertritt des einzelnen Samens von der Lochscheibe in das Venturirohr können Unregelmäßigkeiten auftreten, dergestalt, daß sich die Samen zu verschiedenen Zeiten von den Löchern der Lochscheibe lösen. Weiterhin gelangen die Samen irgendwie in den kontinuierlich ausgepreßten Luftstrom des Venturirohres. Je nachdem, ob sie in die Achse des Venturirohres oder mehr in Randbereiche gelangen, wirkt sich die unterschiedliche Geschwindigkeit der Luftströmung unterschiedlich auf die Samen aus. All dieses beeinträchtigt die Ablagegenauigkeit, also den Säabstand der einzelnen Samen in der Reihe. Die Ablagegenauigkeit des Samens in der Reihe ist aber zudem auch in hohem Maße von der Arbeitsgenauigkeit der Vereinzelungseinrichtung abhängig.

Die GB-A-937 519 zeigt ein Verfahren zum Säen von vereinzelten Samen in einer Vorrichtung, bei der der Samen mit einem Zellenrad zunächst vereinzelt und sodann in der vereinzelten Form jeweils aufeinanderfolgend einer Leiteinrichtung in Form eines schräggestellten Fallrohres zugeführt wird. Dieses Fallrohr mündet in einen trichterförmigen Teil und setzt sich in einem weiteren Fallrohrabschnitt fort. In dem trichterförmigen Teil wird ein kontinuierlicher oder pulsierender Luftstrom hinzugefügt, um auf diese Art und Weise die einzelnen, auf Abstand befindlichen Samenkörner in dem Fallrohr zusätzlich zu beschleunigen. Fehler oder Unregelmäßigkeiten in der Vereinzelungseinrichtung sowie infolge ungleichmäßiger Reibung zurückgelegte unterschiedliche Wege im Fallrohr werden durch die Druckluftbeschleunigung nur noch vergrößert, so daß die Ablagegenauigkeit, also die Einhaltung des Säabstands, in erster Linie von der korrekten Arbeitsweise der Vereinzelungseinrichtung sowie den nachfolgenden Gegebenheiten, z. B. der Reibung im Fallrohr, abhängig ist.

Aus der DE-A-28 47 514 ist eine Vorrichtung zum Vereinzeln und Ablegen von körnigem Gut bekannt. Es ist ein Trichter vorgesehen, der in ein Paar Spreizbacken mit trichterförmiger Ausnehmung übergeht. Die trichterförmige Ausnehmung weist an ihrem unteren Ende eine Bohrung kleiner als das kleinste Korn auf. Zwischen dem Trichter und dem Paar Spreizbacken ist ein ringförmiger Luftspalt angeordnet, durch den ein Luftstrom in den Trichter und die trichterförmige Ausnehmung eingeleitet wird. Befinden sich nun mehrere Körner in dem Trichter bzw. der trichterförmigen Ausnehmung, so werden diese bis auf ein einzelnes, welches vor der Bohrung zu liegen kommt, durch den Luftstrom bis auf eine gewisse Höhe in den Trichter hinaufgeblasen. Durch ein kurzzeitiges Öffnen der Spreizbacken wird das einzelne Korn, welches vor der Bohrung liegt, freigegeben. Hierbei fällt es durch die erweiterte Bohrung unter Einwirkung der Schwerkraft hinab. Ein gewisser Beschleunigungseffekt durch den Luftstrom tritt hierbei auf. Der Beschleunigungseffekt ist jedoch nur sehr schwach ausgeprägt, da anderenfalls die hochgeblasenen Körner ebenfalls nach unten gesaugt und durch die erweiterte Bohrung gerissen würden. Die Geschwindigkeit des einzelnen aus der Vorrichtung austretenden Korns ist demnach nur geringfügig höher, als wenn sie allein auf die Schwerkraft zurückzuführen wäre. Durch die DE-A-28 47 514 wird ferner angeregt, statt des Luftstroms einen Flüssigkeitsstrahl zu verwenden. Die Verwendung eines Flüssigkeitsstrahls anstelle des Luftstroms ist jedoch bei der beschriebenen Vorrichtung gänzlich unmöglich. Da ein kontinuierlicher Flüssigkeitsstrahl zum Fernhalten der Körnermehrheit von der Bohrung notwendig wäre, würde der Trichter ständig überlaufen. Je nach der spezifischen Masse der Körner im Verhältnis zur spezifischen Masse der Flüssigkeit könnten noch weitere Schwierigkeiten auftreten. Bei besonders leichten Körnern würde niemals ein einzelnes vor die Bohrung gelangen. Außerdem wären die Flüssigkeitsmengen, die mit dem Korn oder beim Überlaufen des Trichters auf das Feld gelangen, in ihrem Umfang nicht zu kontrollieren. Als Flüssigkeit käme demnach letztlich, wenn überhaupt, nur Wasser in Frage.

Aus der EP-A-071 954 ist eine Vorrichtung bekannt, die eine Weiterentwicklung der Vorrichtung gemäß der DE-A-28 47 514 darstellt. Hier ist als weiteres Bauteil ein Blasrohr vorgesehen, welches einen Luftstrom auf die Bohrung hin richtet, während der Ringspalt in Fortfall kommt. Auf diese Weise beschleunigt der Luftstrom das einzelne Korn beim Öffnen der Spreizbacken mit größerer Wahrscheinlichkeit gerade soweit, daß die Spreizbacken geschlossen werden können bevor die restlichen Körner durch die Öffnung hindurchtreten. Eine zuverlässige Wirkungsweise der Vorrichtung wird aber nur durch einen zusätzlichen Ausstoßer für das einzelne Korn oder Rückhaltemaßnahmen für die restlichen Körner erreicht. Von einer signifikanten Beschleunigung kann schon allein aufgrund der kurzen Beschleunigungswege nicht die Rede sein. Die Beschleunigung erfolgt maximal über die Länge der Bohrung, welche sich nur durch die Wandung eines Gehäuses hindurch erstreckt.

Die GB-A-593 983 zeigt eine Einrichtung mit einem taktweise in einer elliptischen Bahn bewegten Saug- und Blaskopf an einem Schwanenhals, wobei dieser Saugkopf mit einer Öffnung in einen Samenvorrat eintaucht, ein einzelnes Samenhorn ansaugt, dieses bei seiner Bewegung aufwärts fördert und im oberen Bereich über der Öffnung eines Fallrohres abgibt, wobei während dieser Bewegung der Saugstrom in einen Druckstrom alternierend umgewandelt wird, was mit Hilfe eines Blasebalgs geschieht. Damit ist an sich nur eine andere Art einer Vereinzelungsvorrichtung beschrieben, aus der heraus das vereinzelte Samenkorn in eine Leiteinrichtung, nämlich ein Fallrohr, abgegeben wird. Das Samenkorn fällt durch die Leiteinrichtung entsprechend der Arbeitsgenauigkeit der Vereinzelungseinrichtung hinab.

Die DE-OS 34 41 703 zeigt eine Einzelkornsävorrichtung mit einem Kammerrad, bei dem zur Führung und Zentrierung der durchlaufenden Samenkörner in den Kammerwänden des Kammerrads und/oder in dessen Gehäuse eine die Samenkörner aufnehmende Führungsrinne vorgesehen ist. Durch diese Führungsrinne findet zwar eine Zentrierwirkung statt. Diese Zentrierwirkung wird jedoch im Bereich der Vereinzelungseinrichtung erzielt, aus der heraus das einzelne Samenkorn im freien Fall in die Furche gelangt.

Die DE-OS 27 11 464 zeigt eine Vorrichtung zum Vereinzeln und Säen von Samenkörnern, die in einer Suspension dargeboten bzw. aufbereitet werden. Das einzelne Samenkorn wird im Bereich der Vereinzelungseinrichtung durch einen Saugstrom vor einer Düse festgehalten, bis die übrigen Samenkörner weggeschwemmt sind. Dann wird dieses Samenkorn durch zwei Strömungsimpulse, die quer zueinander gerichtet sind, in eine nach unten führende Leiteinrichtung abgegeben, aus der heraus es unmittelbar in die Furche gelangt.

Der Erfindung liegt die Aufgabe zugrunde, bei einem Verfahren und einer Vorrichtung der eingangs beschriebenen Art die Ablagegenauigkeit einzelner Samen zueinander zu verbessern, damit der Säabstand einzelner Samen in der Reihe genauer eingehalten wird, um auf diese Weise das Säbild hinsichtlich des Säabstandes zu optimieren und so in Anpassung an die Bedingungen für die jeweilige Samenart eine Ertragssteigerung zu erzielen.

Erfindungsgemäß wird dies bei dem Verfahren der eingangs beschriebenen Art dadurch erreicht, daß der einzelne Samen bei seinem Fangen punktförmig zu einer Achse entsprechend der Abgaberichtung und unter Zentrierwirkung zwischengelagert wird, und daß der einzelne Samen durch einen kurzzeitigen Fluidstoß in Abgaberichtung aus seiner zwischengelagerten Ruhestellung beschleunigt in die Furche abgegeben wird. Wichtig ist zunächst einmal, daß der einzelne Samen, also jeweils nur ein Samen, punktförmig immer am gleichen Punkt zu einer Achse entsprechend der Abgaberichtung zentriert zwischengelagert wird. Der einzelne Samen nimmt somit immer an der gleichen Stelle seine Ruhestellung ein. Diese Stelle ist punktförmig festgelegt, nicht mehr linienförmig. Durch die intermittierende Einsteuerung eines kurzzeitigen Fluidstoßes, also mit Luft und/oder Flüssigkeit, wird der einzelne Samen immer von der gleichen Stelle aus in gleicher Weise beschleunigt und in die Furche abgegeben. Da sich die Ruhestellung des Samens vergleichsweise tief, insbesondere im Innenraum des Schares befindet, ist die Fallhöhe bzw. Abwurfhöhe gering. Auf dieser kurzen Strecke wirkt im übrigen nicht nur die Schwerkraft, sondern zusätzlich noch der intermittierende Fluidstoß auf den einzelnen Samen ein, so daß dieser beschleunigt in die Furche abgegeben wird. Hierdurch ergibt sich auch eine bessere Einbettung des einzelnen Samens an der Auftreffstelle im Erdreich verbunden mit dem Vorteil eines besseren Anschlusses an das Kapillarsystem für die Erdfeuchtigkeit. Dies ist in besonderer Weise dann gegeben, wenn als Fluid Wasser, eine Nährlösung o. dgl. benutzt wird. Weiterhin ist dabei vorteilhaft, daß der Säabstand von der Arbeitsgenauigkeit der Vereinzelungseinrichtung nicht mehr abhängig ist. Der Druck des Fluids kann variabel eingestellt und an die jeweilige Samenart angepaßt werden. Auch die Zeitspanne der Einwirkung des kurzzeitigen Fluidstoßes kann variabel einstellbar gestaltet werden, um auf diese Art und Weise auch die Menge einer Nähr- oder auch Düngerlösung für den einzelnen Samen festzulegen.

Als Fluid kann Luft Verwendung finden. Dies hat den Vorteil, daß dieses Fluid nicht in gesonderten Behältern mitgeführt werden muß, sondern jeweils in praktisch unbegrenzter Menge zur Verfügung steht. Es ist aber auch möglich, als Fluid eine Flüssigkeit zu verwenden. Diese kann neben Wasser ggf. auch eine Nährlösung, Beizmittel, Schutzmittel gegen Unkraut oder Schädlinge, Impfmittel, Düngemittel, Keimförderer oder Keimungshemmer enthalten. Als Impfmittel kommen beispielsweise Rhizobienkeime infrage. Keimförderer und/oder Keimungshemmer sind beispielsweise dann auch in ihrer gemeinsamen Anwendung auf verschiedenen, zueinandergehörigen Säeinrichtungen sinnvoll, wenn Samen zweier verschiedener Arten gemeinsam gesät werden sollen, wobei es dann auf die genaue Einhaltung des Säbildes der Samen bzw. Pflanzen zueinander ankommt und durch die Begünstigung bzw. Verzögerung der Keimung auf die Wachstumsbedingungen und die Erntebedingungen Einfluß genommen werden soll. Bei Verwendung eines Flüssigkeitsstrahls als Fluidstoß wird der einzelne Samen in eine hiermit verfestigte Unterlage eingebettet und damit erreicht, daß das Kapillarsystem mehr Feuchtigkeit zum Quellen und Keimen des Samens bereitstellt, was sich vorteilhaft in einem gleichmäßigeren Auflaufen und Keimen bemerkbar macht. Auf diese Weise ist auch die Unkrautbekämpfung variabel einstellbar und kann insbesondere punktuell um den einzelnen Samen bzw. die Kulturpflanze herum durchgeführt werden. Durch den Fluidstoß findet im übrigen eine kontinuierliche Reinigung der Zwischenlagerungsstelle statt.

Die Sävorrichtung zur Durchführung des Verfahrens kennzeichnet sich erfindungsgemäß dadurch, daß die Einrichtung zum Auffangen und Abgeben des einzelnen Samens eingerichtet ist, ein axiales, im wesentlichen geschlossenes Gehäuse aufweist und zur Zentrierung des einzelnen Samens zu der Achse des Gehäuse entsprechend der Abgaberichtung trichterförmig ausgebildet ist, daß der trichterförmige Teil des Gehäuses in eine Stellung, in der er den einzelnen Samen auffängt und festhält, und wahlweise in eine zweite Stellung, in der er den einzelnen Samen freigibt, bewegbar ist, und daß eine pulsierend betreibbare Fluidquelle an das Gehäuse der Einrichtung angeschlossen ist. Wichtig ist zunächst einmal, daß die Einrichtung zum Auffangen und Abgeben nicht für mehrere Samen gleichzeitig oder nacheinander, sondern jeweils nur für einen einzelnen Samen eingerichtet ist. Damit besteht die Möglichkeit, jeden einzehen Samen punktförmig an genau bestimmter Stelle zwischenzulagern. Dies geschieht in einem axialen, im wesentlichen geschlossenen Gehäuse, so daß der Samen verläßlich in diesem Gehäuse zwischengelagert wird und nicht etwa seitlich herausspringen kann. Selbstverständlich muß dieses Gehäuse einen Anschluß an die Leiteinrichtung, z. B. das Fallrohr, haben, aus welchem der einzelne Samen nach der Vereinzelungseinrichtung herabgeführt wird. Besonders wichtig ist eine trichterförmige Ausbildung des Gehäuses an seinem unteren Ende, also mit einem Trichter, dessen Spitze nach unten in Abgaberichtung zeigt. Unter einer solchen trichterförmigen Ausbildung wird eine sich irgendwie nach unten verjüngende Ausbildung verstanden, die auch als Kegelstumpf, Pyramidenstumpf oder im Durchmesser verengender Schlauchabschnitt o. dgl. bestehen kann. Dieser Trichter kann an seinem unteren Ende offen oder geschlossen ausgebildet sein. Im Falle der Anordnung einer Öffnung muß dieser natürlich kleiner sein als der einzelne Samen, damit dieser an dieser Stelle in seiner Ruhestellung gefangen und damit zwischengelagert werden kann. Der trichterförmige Teil des Gehäuses ist in seiner ersten Stellung so ausgebildet, daß er den einzelnen Samen auffängt, zentriert und immer an derselben Stelle festhält. In der zweiten Stellung, in die der trichterförmige Teil des Gehäuses entweder selbständig gesteuert oder auch durch den Fluidstoß geführt wird, wird der einzelne Samen aus der gleichen Stellung heraus beschleunigt. Ein solcher Fluidstoß läßt sich z. B. durch Anwendung von Magnetventilen zeitlich in äußerst genau festgelegten Abständen steuern, so daß hierdurch die Ablagegenauigkeit und der Säabstand erheblich verbessert wird.

Besonders vorteilhaft ist es, wenn der trichterförmige Teil des Gehäuses durch die pulsierende Fluidquelle in die beiden Stellungen betätigbar ist. In diesem Fall ist eine gesonderte Ansteuerung und Bewegung des trichterförmigen Teils des Gehäuses entbehrlich. Der trichterförmige Teil des Gehäuses muß nur entweder aus mehreren starren, aber beweglich gelagerten Teilen bestehen oder insgesamt elastisch nachgiebig ausgebildet sein, wie dies z. B. ein kegelstumpfförmiger Trichter aus Gummi o. dgl. ist.

Das Gehäuse der Einrichtung zum Fangen und Abgeben des einzelnen Samens kann im wesentlichen zylindrisch ausgebildet und mit der Achse des Zylinders in Abgaberichtung ausgerichtet sein. Dabei weist das zylindrische Gehäuse seitlich eine Öffnung zum Übertritt des Samens aus der Leiteinrichtung heraus auf und am oberen Ende des zylindrischen Gehäuses ist die Fluidquelle angeschlossen, während im unteren Bereich die trichterförmige Zwischenlagerungsstelle angeordnet ist. Die Achse des zylindrischen Gehäuses bestimmt somit die Abgaberichtung. Es ist durchaus möglich, die Achse des Gehäuses an die Fahrgeschwindigkeit anzupassen und entsprechend in ihrer Neigung zu verändern, damit letztendlich der einzelne Samen senkrecht nach unten beschleunigt in die Furche des Schars abgelegt wird. Damit der einzelne Samen durch die Leiteinrichtung in das zylindrische Gehäuse gelangt und punktförmig zentriert abgelegt wird, genügt in aller Regel die Einwirkung der Schwerkraft. Zeitliche Unterschiede, die sich beim Ablegen des Samens in der Ruhestellung, also in der Zwischenlagerung, ergeben, sind nicht nachteilig für die Einhaltung des Säabstands, weil sie durch den genau steuerbaren, intermittierenden Fluidstoß ausgeglichen werden. Es ist lediglich erforderlich, daß die Abgabegeschwindigkeit der Vereinzelungseinrichtung und die Taktzeit des Fluidstoßes synchron aufeinander abgestimmt sind, damit ein neuer Samen durch die Leiteinrichtung in die Ruhestellung gelangen kann, wenn gerade der Fluidstoß unterbrochen ist.

Das Gehäuse der Einrichtung zum Fangen und Abgeben kann im Bereich des Anschlusses der Fluidquelle ein Magnetventil und eine Düse für die Erzeugung der kurzzeitigen Fluidstöße aufweisen. Mit solchen Magnetventilen lassen sich die Taktzeiten der Fluidstöße sehr genau steuern. Durch eine Düse wird eine definierte Strömung geschaffen, so daß hinsichtlich des punktförmig zwischengelagerten und ausgerichteten Samens immer identische Beschleunigungsbedingungen gegeben sind.

Die trichterförmige Zwischenlagerstelle kann auf Druck elastisch nachgiebige oder verschwenkbare gelagerte Wandungsteile oder eine solche Wandung aufweisen. Die trichterförmige Wandung bzw. die Wandungsteile können aus pyramidenartig angeordneten Metallstücken, aus einem schlauchartigen Gummikörper, aus Draht- oder Gewebestücken o. dgl. sowie einer Rückführfeder, z. B. einem Gummiring, bestehen. Die Rückführung in die Schließ- bzw. Fangstellung der trichterförmigen Wandungsteile kann allein infolge Einwirkens einer Gewichtskraft, aber auch durch Verwendung von Federn erfolgen.

Die trichterförmige Wandung bzw. die Wandungsteile sind zweckmäßig auswechselbar an der Einrichtung zum Fangen und Abgeben angeordnet, um einmal einem sich eventuell einstellenden Verschleiß Rechnung zu tragen und zum anderen eine jeweilige Anpassung an die Größe und Art des Samens zu ermöglichen.

Eine Steuereinrichtung für die synchrone Ansteuerung der Vereinzelungseinrichtung einerseits und der Einrichtung zum Fangen und Abgeben des einzelnen Samens andererseits ist vorgesehen, um die einzelnen Aggregate in ihrer Arbeitsgeschwindigkeit aneinander anzupassen. Die Steuereinrichtung kann für die zeitlich variable Abgabe der Fluidstöße ausgebildet sein, wobei die Variation natürlich nur innerhalb der Teilung der Vereinzelungseinrichtung sinnvoll arbeitet. Damit ist es aber durchaus möglich, z. B. zwei verschiedene Säabstände jeweils nacheinander in einer Reihe folgend zu bilden, und zwar obwohl die Vereinzelungseinrichtung mit konstanter Teilung arbeitet.

Die der Einrichtung zum Fangen und Abgeben der einzelnen Samen vorgeschaltete Vereinzelungseinrichtung kann über von der Steuereinrichtung gesteuerte Schrittmotore angetrieben sein, damit die Vereinzelungseinrichtung die einzelnen Samen im jeweils richtigen Takt zuliefert.

Das Gehäuse der Einrichtung zum Fangen und Abgeben kann im Bereich der trichterförmigen Wandung oder dieser vorgeschaltet eine Einschnürung aufweisen, um an dieser Stelle gezielt die Strömung des Fluids zu formen.

Die Erfindung wird anhand bevorzugter Ausführungsformen weiter erläutert. Es zeigen:

Figur 1    einen Vertikalschnitt durch die wesentlichen Teile der Vorrichtung,

Figur 2    einen Vertikalschnitt durch die Einrichtung zum Fangen und Abgeben des einzelnen Samens in einer zweiten Ausführungsform,

Figur 3 einen Schnitt gemäß der Linie III-III in der Draufsicht auf trichterförmige Wandungsteile,

Figur 4 eine ähnliche Darstellung wie Figur 3, jedoch an einer anderen Ausführungsform der trichterförmigen Wandungsteile und

Figur 5 eine weitere Ausführungsform der trichterförmigen Wandungsteile in einem Vertikalschnitt.

Obwohl in den Zeichnungen immer nur ein einzelnes Säaggregat dargestellt ist, versteht es sich, daß an einer Sämaschine auch mehrere solcher Säaggregate nebeneinander und/oder hintereinander versetzt zueinander vorgesehen sein können. Eine solche Sämaschine eignet sich zum Aussäen von Mais, Bohnen, Zuckerrüben, Getreide u. dgl. Auch eine gemischte Aussaat aus Samen verschiedener Art ist insoweit möglich, wobei jedes Säaggregat natürlich nur auf den Samen einer Art abgestimmt ist.

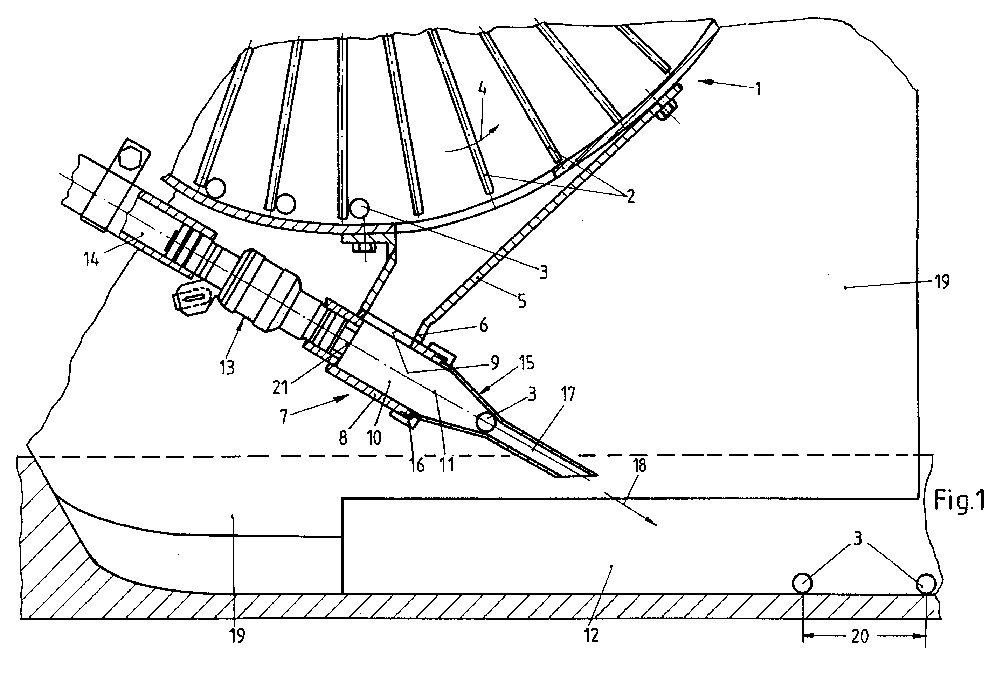

Jedes Säaggregat weist eine Vereinzelungseinrichtung (1) auf, die an sich beliebig ausgebildet sein kann, beispielsweise als Zellenrad (2). Wesentlich ist, daß der einzelne Samen (3) in vereinzelter Form zur Verfügung gestellt wird, wenn das Zellerad (2) gemäß Pfeil (4) angetrieben wird. Der einzelne Samen gelangt jeweils taktweise zu einer Abgabestelle an der Vereinzelungs einrichtung (1), an der eine Leiteinrichtung (5), meist in Form eines Fallrohres, angeschlossen ist. In einem unteren Endbereich (6) der Leiteinrichtung (5) ist eine Einrichtung zum Fangen und Abgeben (7) des einzelnen Samens (3) vorgesehen, die im wesentlichen aus einem zylindrischen Gehäuse (8), welches eine seitlich angeordnete Öffnung (9) zum Übertritt des einzelnen Samens (3) aus der Leiteinrichtung (5) in den Innenraum (10) des zylindrischen Gehäuses aufweist. Das zylindrische Gehäuse (8) ist mit seiner Achse (11) in Abgaberichtung des einzelnen Samens (3) in die Furche (12) hinein angeordnet. Diese Abgaberichtung und damit die Achse (11) kann in ihrem Winkel verändert und so eingestellt werden, daß sie an die Arbeitsgeschwindigkeit der Sämaschine angepaßt ist. Am oberen Ende des Gehäuses (8) ist über ein elektrisch ansteuerbares Einspritzventil (13) eine Fluidleitung (14) angeschlossen, an der Fluid, also Luft oder Flüssigkeit, unter Druck ansteht. Über das Einspritzventil (13) können somit intermittierend Fluidstöße in das Gehäuse (8) hinein abgegeben werden. An seinem unteren Endbereich ist das Gehäuse (8) mit trichterförmigen Wandungsteilen (15) oder einer solchen trichterförmigen Wandung ausgestattet, die sich jedenfalls nach unten in Abwurfrichtung verengen und dort offen oder geschlossen ausgebildet sein können. In Figur 1 ist ein solcher trichterförmiger Wandungsteil (15) aus Gummi bzw. gummielastischem Material dargestellt. Der trichterförmige Wandungsteil (15) ist mit dem Gehäuse (8) durch einen Überwurfring (16) verbunden und besitzt in Abgaberichtung eine Öffnung (17),deren Durchmesser kleiner ist der Durchmesser des einzelnen Samens (3). Der trichterförmige Wandungsteil (15) könnte auch an seinem unteren Ende mit einer vorgesehenen Öffnungsmöglichkeit, aber ansonsten geschlossen ausgebildet sein, indem z. B. eine schlitzförmige Öffnung vorgesehen ist. Wesentlich ist, daß der trichterförmige Wandungsteil (15) und die Achse (11) so zueinander angeordnet sind, daß der einzelne Samen (3) aus der Leiteinrichtung (5) in den Innenraum (10) des Gehäuses (8) herabfallen kann und dort infolge Schwerkrafteinwirkung sich am unteren Ende der trichterförmigen Wandung (15) in einer definierten Ruhelage ablegt, in der er zentriert zur Achse (11) immer an derselben Stelle ruht. Durch taktweises Ansteuern des Einspritzventils (13) wird ein Fluidstoß in Richtung der Achse (11) auf den einzelnen Samen (3) in Ruhestellung ausgeübt, wodurch der Samen (3) aus seiner zentrierten Ruheposition heraus beschleunigt wird. Dabei öffnet sich die trichterförmige Wandung (15) bzw. vergrößert ihren Durchmesser so, daß der einzelne Samen (3) in Richtung des Pfeils (18), also in Richtung der Achse (11) in die Furche (12) beschleunigt abgelegt oder besser abgeschossen wird. Nach Beendigung dieses Fluidstoßes kehrt die trichterförmige Wandung (15), z. B. infolge der Rückstellkraft eines solchen Gummitrichters, in ihre Ruhelage zurück, so daß sie jetzt wieder bereit ist, den nächsten, von der Vereinzelungseinrichtung (11) angelieferten Samen aufzufangen und in der Ruhestellung zum Zwecke der Zwischenlagerung zentrisch am Ende des Trichters abzulagern. Es versteht sich, daß die Abgabegschwindigkeit der einzelnen Samen (3) der Vereinzelungseinrichtung (1) und die Taktgeschwindigkeit der Fluidstöße über das Einspritzventil (13) aufeinander abgestimmt sein müssen, damit immer nur ein Samen zwischengelagert und dann aus dem trichterförmigen Wandungsteil (15) ausgetrieben wird, bevor ein zweter Samen in den Innenraum (10) des Gehäuses (8) der Einrichtung (7) einfällt. Die trichterförmige Wandung (15) ist, wie ersichtlich, auswechselbar an dem Gehäuse (8) der Einrichtung (7)angeordnet, so daß ein Austausch gegen andere Konstruktionen und Größen möglich ist, um eine Anpassung an die jeweils ausgesäte Samenart und Samengröße zu erzielen. Die Achse (11) der Einrichtung (7) kann vorzugsweise und relativ zu der Bewegungskomponente des einzelnen Samen abgestimmt so geneigt eingestellt werden, daß der einzelne Samen gegenüber der Furche (12), die von einem Schar (19) gezogen wird, senkrecht herabbeschleunigt wird. Wie ersichtlich, ist die Einrichtung (7) im Bereich des Schares (19) angeordnet, so daß die Abwurfhöhe für den einzelnen Samen aus seiner Ruhestellung in der trichterförmigen Wandung (15) heraus vergleichsweise gering ist. Insgesamt ergibt sich mit sehr großer Genauigkeit ein reproduzierbarer Säabstand (20) von Samen (3) zu Samen (3) in der Reihe. Hierauf kommt es letztendlich an. Auch die Einbettung des einzelnen Samens (3) und der Bodenschluß werden mit dieser Vorrichtung verbessert, so daß die Keimbedingungen vergleichsweise günstig sind. Dies ist insbesondere dann der Fall, wenn als Fluid eine unter Druck stehende Flüssigkeit Verwendung findet, die neben Wasser auch eine Nährlösung oder andere Behandlungsmittel enthalten kann. Pro einzelnen Samen (3) kann Wasser bzw. Nährlösung in der Größenordnung von etwa 0,2 bis 1 cm$^3$ ausgespritzt werden. Das Gehäuse (8) der Einrichtung (7) kann insbesondere an der Anschlußstelle des Einspritzventils (13) mit einer Düse (21) versehen sein oder als Düse ausgebildet sein. Auch sonstige Verengungen im Gehäuse (8) können vorgesehen sein, um die Strömung gezielt zu beeinflussen. Wichtig ist, daß bei jedem Fluidstoß durch die zentrierte Ablage des Samens (3) immer wieder identische Ausgangsbedingungen für die Beschleunigung des einzelnen Samens (3) geschaffen sind.

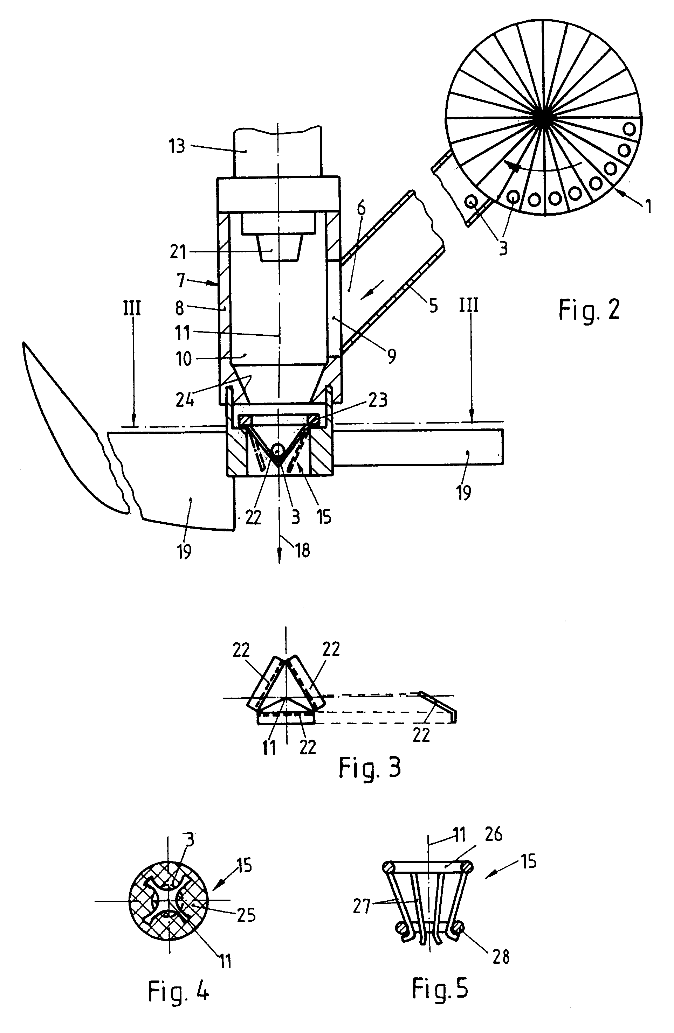

Figur 2 zeigt eine andere Ausführungsform der wesentlichen Teile der Vorrichtung, wobei lediglich die Achse (11) in der Regelvertikal angeordnet ist. Die trichterförmige Wandung ist hier in Form eines dreiseitigen Pyramidenstumpfes (vgl. auch Figur 3) ausgebildet und besteht somit aus drei Blechstücken (22), die einander zu einer unten geschlossenen Pyramide (in der Ruhestellung) ergänzen und jeweils abgewinkelt ausgebildet sind. In ihrer Ruhestellung werden sie durch einen Gewichtsring (23) belastet bzw. in diese geschlossene Ruhestellung zurückgeführt, sobald der Fluidstoß unterbrochen ist. Umgekehrt öffnet sich diese trichterförmige Wandung (15) durch Verkippen der Blechstücke (22) dann, wenn der Fluidstoß einwirkt. Diese Stellung ist in gestrichelter Linienführung in Figur 2 angedeutet. Es versteht sich, daß anstelle des Gewichtsrings (22) natürlich auch eine Schraubenfeder vorgesehen sein könnte. Im unteren Bereich besitzt das Gehäuse (8) eine Einschnürung (24), die auf die Strömung Einfluß nimmt und den Trichter der trichterförmigen Wandung (15) insoweit vorbereitet. Bei den Ausführungen nach den Figuren 1 und 2 kann die Öffnung (9) des Gehäuses (8) auch durch einen steuerbaren Verschluß, z. B. nach Art eines fotografischen Blendenverschlusses, zeitweise abgeschlossen werden, um der Einrichtung (7) für die Ruhestellung gleichsam eine zweite Ruhestellung vorzuordnen. Der Verschluß kann auch im Bereich der Leiteinrichtung (5), also des Fallrohres, angeordnet sein und ist insbesondere bei langen Fallrohren sinnvoll, wie sie insbesondere für Getreide eingesetzt werden.

Figur 4 zeigt eine Draufsicht auf die trichterförmige Wandung (15), etwa in Richtung der Schnittdarstellung III-III in Figur 2. Die Wandung (15) ist hier aus Drahtgeflecht (25) gestanzt und geformt, welches die erforderliche Elastizität aufweist, um einmal in die Ruhestellung zurückzukehren und den gestrichelt angeordneten Samen (3) zu fangen und zwischenzulagern und zum anderen zu öffnen, so daß der einzelne Samen (3) durch den Fluidstoß ausgetrieben wird. Es versteht sich, daß das Drahtgeflecht (25) trichterförmig verformt ist.

Figur 5 zeigt einen Vertikalschnitt durch eine weitere Ausführungsform der trichterförmigen Wandung (15). An einem Lagerring (26) sind einzelne Metallstäbe (27), die in sich elastisch sind, trichterförmig angeordnet und im unteren Endbereich von einem Gummiring (28) in der Ruhestellung gehalten bzw. zurückgeführt. Auch diese trichterförmige Wandung (15) führt infolge des Fludstoßes eine Öffnungsbewegung aus, wobei sich der Gummiring (28) erweitert bzw. spannt, so daß der einze lne Samen (3) beschleunigt aus der Einrichtung (7) herausgeworfen werden kann. Nach Beendigung des Fluidstoßes führt der Gummiring (28) als Rückführelement die Metallstäbe (27) wieder in die dargestellte trichterförmige Lage zurück. Die Metallstäbe (28) können in sich elastisch ausgebildet sein oder beweglich an dem Lagerring (26) gelagert sein.

**Bezugszeichenliste :**

| 1 = | Vereinzelungseinrichtung |
|---|---|
| 2 = | Zellenrad |
| 3 = | Samen |
| 4 = | Pfeil |
| 5 = | Leiteinrichtung |
| 6 = | Endbereich |
| 7 = | Einrichtung |
| 8 = | Gehäuse |
| 9 = | Öffnung |
| 10 = | Innenraum |
| 11 = | Achse |
| 12 = | Furche |
| 13 = | Einspritzventil |
| 14 = | Fluidleitung |
| 15 = | Trichterförmige Wandung |
| 16 = | Überwurfring |
| 17 = | Öffnung |
| 18 = | Pfeil |
| 19 = | Schar |
| 20 = | Säabstand |
| 21 = | Düse |
| 22 = | Blechstück |
| 23 = | Gewichtsring |

24 = Einschnürung
25 = Drahtgeflecht
26 = Lagering
27 = Metallstab
28 = Gummiring

**Patentansprüche**

1. Verfahren zum Säen von vereinzelten Samen (3) in eine von einem Schar (19) gezogene Furche (12), in dem der vereinzelte Samen (3) in einer Leiteinrichtung (5) geführt, im Bereich des Schares (19) gefangen, kurzzeitig zwischengelagert und dann in die Furche (12) abgegeben wird, dadurch gekennzeichnet, daß der einzelne Samen (3) bei seinem Fangen punktförmig zu einer Achse (11) entsprechend der Abgaberichtung (18) und unter Zentrierwirkung zwischengelagert wird, und daß der einzelne Samen (3) durch einen kurzzeitigen Fluidstoß in Abgaberichtung aus seiner zwischengelagerten Ruhestellung beschleunigt in die Furche (12) abgegeben wird.

2. Verfahren nach Anspruch 1, dadurch gekennzeichnet, daß als Fluid Luft Verwendung findet.

3. Verfahren nach Anspruch 1, dadurch gekennzeichnet, daß als Fluid eine Flüssigkeit Verwendung findet, die neben Wasser ggf. auch eine Nährlösung, Beizmittel, Schutzmittel gegen Unkraut oder Schädlinge, Impfmittel, Düngemittel, Keimförderer oder Keimungshemmer enthält.

4. Sävorrichtung mit einer Vereinzelungseinrichtung (1) für die Samen, einer Leiteinrichtung (5) und einem Schar (19), wobei im Schar im Bereich des Endes der Leiteinrichtung eine Einrichtung zum Auffangen der in der Leiteinrichtung bewegten Samen und zum Ablegen der Samen in die vom Schar gezogene Furche vorgesehen ist, zur Durchführung des Verfahrens nach den Ansprüchen 1 bis 3, dadurch gekennzeichnet, daß die Einrichtung (7) zum Auffangen und Abgeben des einzelnen Samens (3) eingerichtet ist, ein axiales, im wesentlichen geschlossenes Gehäuse (8) aufweist und unter Zentrierung des einzelnen Samens zu der Achse (11) des Gehäuses (8) entsprechend der Abgaberichtung (18) trichterförmig ausgebildet ist, daß der trichterförmige Teil (15) des Gehäuses in eine erste Stellung, in der er den einzelnen Samen (3) auffängt und festhält, und wechselweise in eine zweite Stellung, in der er den einzelnen Samen freigibt, bewegbar ist, und daß eine pulsierend betreibbare Fluidquelle an das Gehäuse der Einrichtung angeschlossen ist.

5. Sävorrichtung nach Anspruch 4, dadurch gekennzeichnet, daß der trichterförmige Teil (15) des Gehäuses (8) durch die pulsierende Fluidquelle (13, 14) in die beiden Stellungen betätigbar ist.

6. Sävorrichtung nach den Ansprüchen 4 und 5, dadurch gekennzeichnet, daß das Gehäuse (8) der Einrichtung (7) zum Fangen und Abgeben des einzelnen Samens (3) im wesentlichen zylindrisch ausgebildet und mit der Achse (11) des Zylinders in Abgaberichtung (18) ausgerichtet ist, daß das zylindrische Gehäuse (8) seitlich eine Öffnung (9) zum Übertritt des Samens (3) aus der Leiteinrichtung (5) heraus aufweist, und daß am oberen Ende des zylindrischen Gehäuses (8) die Fluidquelle (13, 14) angesc hlossen ist, während im unteren Bereich die trichterförmige Zwischenlagerstelle angeordnet ist.

7. Sävorrichtung nach Anspruch 6, dadurch gekennzeichnet, daß das Gehäuse (9) der Einrichtung (7) zum Fangen und Abgeben im Bereich des Anschlusses der Fluidquelle ein Magnetventil (13) und eine Düse (21) für die Erzeugung der kurzzeitigen Fluidstöße aufweist.

8. Sävorrichtung nach Anspruch 6, dadurch gekennzeichnet, daß die trichterförmige Zwischenlagerstelle auf Druck elastisch nachgiebige oder verschwenkbar gelagerte Wandungsteile (15) oder eine solche Wandung (15) aufweist.

9. Sävorrichtung nach den Ansprüchen 6 und 8, dadurch gekennzeichnet, daß die trichterförmige Wandung (15) bzw. Wandungsteile aus pyramidenartig angeordneten Metallstücken (27), aus einem schlauchartigen Gummikörper, aus Draht oder Gewebestücken (25) o. dgl. sowie einer Rückführfeder, z. B. einem Gummiring (28), besteht.

10. Sävorrichtung nach den Ansprüchen 6, 8 oder 9, dadurch gekennzeichnet, daß die trichterförmige Wandung (15) bzw. de Wandungsteile auswechselbar an der Einrichtung (7) zum Fangen und Abgeben angeordnet sind.

11. Sävorrichtung nach den Ansprüchen 4 bis 10, dadurch gekennzeichnet, daß eine Steuereinrichtung für die synchrone Ansteuerung der Vereinzelungseinrichtung (1) einerseits und der Einrichtung (7) zum Fangen und Abgeben des einzelnen Samens (3) andererseits vorgesehen ist.

**12.** Sävorrichtung nach Anspruch 11, dadurch gekennzeichnet, daß die Steuereinrichtung für die zeitlich variable Abgabe der Fluidstöße ausgebildet ist.

**13.** Sävorrichtung nach den Ansprüchen 4 bis 6, dadurch gekennzeichnet, daß die der Einrichtung (7) zum Fangen und Abgeben der einzelnen Samen (3) vorgeschaltete Vereinzelungseinrichtung (1) über von der Steuereinrichtung gesteuerte Schrittmotore angetrieben ist.

**14.** Sävorrichtung nach den Ansprüchen 4 bis 6, dadurch gekennzeichnet, daß das Gehäuse (9) der Einrichtung (7) zum Fangen und Abgeben im Bereich der trichterförmigen Wandung eine Einschnürung (24) aufweist.

**Claims**

**1.** Method of sowing isolated seeds (3) in a furrow (12) cut by a coulter (19), in which the isolated seed (3) is guided in a guiding device (5), caught in the region of the coulter (19), temporarily held for a brief period and then dispensed into the furrow (12), characterised in that, on being caught, the individual seed (3) is temporarily held in the form of a point on an axis (11) in a manner corresponding to the dispensing direction (18) and with a centring action, and in that the individual seed (3), accelerated out of its temporarily held rest position by a brief fluid shock in the dispensing direction, is dispensed into the furrow (12).

**2.** Method according to claim 1, characterised in that air is used as fluid.

**3.** Method according to Claim 1, characterised in that a liquid which, in addition to water, also contains, if required, a nutrient solution, dressing agents, weed-or pest-combating agents, inoculants, fertilisers, germination promoters or germination inhibitors, is used as fluid.

**4.** Sowing apparatus having an isolating device (1) for the seeds, a guiding device (5) and a coulter (19), a device for catching the seeds moved in the guiding device and for depositing the seeds in the furrow cut by the coulter being provided in the coulter in the region of the end of the guiding device, for carrying out the method according to Claims 1 to 3, characterised in that the device (7) is set up to catch and dispense the individual seed (3), has an axial, essentially closed housing (8) and is of funnel-shaped design, centring the individual seed relative to the axis (11) of the housing (8) in a manner corresponding to the dispensing direction (18), in that the funnel-shaped part (15) of the housing is movable into a first position, in which it catches and holds fast the individual seed (3) and alternately into a second position, in which it releases the individual seed, and in that a pulsatingly drivable fluid source is connected to the housing of the device.

**5.** Sowing apparatus according to Claim 4, characterised in that the funnel-shaped part (15) of the housing (8) is actuable into the two positions by the pulsating fluid source (13, 14).

**6.** Sowing apparatus according to Claims 4 and 5, characterised in that the housing (8) of the device (7) for catching and dispensing the individual seed (3) is of essentially cylindrical design and is aligned with the axis (11) of the cylinder in the dispensing, direction (18), in that, at the side, the cylindrical housing (8) has an opening (9) for the passage of the seed (3) out of the guiding device (5), and in that the fluid source (13, 14) is connected to the upper end of the cylindrical housing (8) while the funnel-shaped temporary holding point is arranged in the lower region.

**7.** Sowing apparatus according to Claim 6, characterised in that, in the region of the connection of the fluid source, the housing (9) of the device (7) for catching and dispensing has a solenoid valve (13) and a nozzle (21) for producing the brief fluid shocks,

**8.** Sowing apparatus according to Claim 6, characterised in that the funnel-shaped temporary holding point has wall parts (15) which are elastically flexible under pressure or are swivellably mounted or has a wall (15) of this kind.

**9.** Sowing apparatus according to Claims 6 and 8, characterised in that the funnel-shaped wall (15) or wall parts comprises or comprise metal pieces (27) arranged like a pyramid, a hose-like rubber body, wire or pieces (25) of fabric or the like, and a return spring, e.g. a rubber ring (28).

**10.** Sowing apparatus according to Claims 6, 8 or 9, characterised in that the funnel-shaped wall (15) or wall parts is/are arranged in an exchangeable manner on the device (7) for catching and dispensing.

11. Sowing apparatus according to Claims 4 to 10, characterised in that a control device for the synchronous activation of the isolating device (1), on the one hand, and of the device (7) for catching and dispensing the individual seed (3), on the other hand, is provided.

12. Sowing apparatus according to Claim 11, characterised in that the control device is designed for the variably timed output of the fluid shocks.

13. Sowing apparatus according to Claims 4 to 6, characterised in that the isolating device (1) placed before the device (7) for catching and dispensing the individual seeds (3) is driven via stepping motors controlled by the control device.

14. Sowing apparatus according to Claims 4, to 6, characterised in that the housing (9) of the device (7) for catching and dispensing has a constriction (24) in the region of the funnel-shaped wall.

**Revendications**

1. Méthode pour semer une à une des semences (3) dans un sillon (12) tracé par un soc (19), dans laquelle les semences (3) sont guidées une à une dans un dispositif de guidage (5), sont retenues dans la région du soc (19), pendant une brève période de stockage intermédiaire, et ensuite déposées dans le sillon (12), **caractérisée** en ce que la semence individuelle (3) est retenue en stockage intermédiaire lors de sa capture, ceci de manière ponctuelle par rapport à un axe (11) correspondant au sens de dépôt (18) et en étant soumise à une action de centrage, et en ce que la semence individuelle (3) est déposée dans le sillon (12) par une brève impulsion fluide dans le sens de dépôt, ce qui l'accélère à partir de sa position de repos en stockage intermédiaire.

2. Méthode selon la revendication 1, caractérisée en ce qu'on utilise l'air comme fluide.

3. Méthode selon la revendication 1, caractérisée en ce qu'on utilise comme fluide un liquide qui contient, outre de l'eau, le cas échéant une solution nutritive, des désinfectants, des agents protecteurs contre les mauvaises herbes ou les parasites, un vaccin, des engrais, des agents favorisant la germination ou retardant la germination.

4. Semoir comportant un dispositif d'individualisation (1) pour les semences, un dispositif de guidage (5) et un soc (19), dans lequel il est prévu dans le soc, dans la région terminale du dispositif de guidage, un dispositif pour capturer les semences mises en mouvement dans le dispositif de guidage et pour déposer les semences dans le sillon tracé par le soc, pour la mise en oeuvre de la méthode selon les revendications 1 à 3, **caractérisé** en ce que le dispositif (7) est agencé pour capturer et déposer la semence individuelle, en ce qu'il présente un boîtier axial (8) essentiellement fermé, et est en forme d'entonnoir assurant le centrage de la semence individuelle par rapport à l'axe (11) du boîtier selon le sens de dépôt (18); en ce que la partie (15) en forme d'entonnoir du boîtier est mobile entre une première position dans laquelle elle capture et retient la semence individuelle (3) et une deuxième position dans laquelle elle libère la semence individuelle; et en ce qu une source de fluide pouvant être actionnée de manière pulsatoire ont raccordée au boîtier du dispositif.

5. Semoir selon la revendication 4, caractérisé en ce que la partie (15) en forme d'entonnoir du boîtier (8) peut être actionnée, dans chacune de ses deux positions, par la source de fluide pulsatoire (13, 14).

6. Semoir selon les revendications 4 et 5, caractérisé en ce que le boîtier (8) du dispositif (7) pour capturer et déposer la semence individuelle (3) est de forme généralement cylindrique et est aligné avec l'axe (11) du cylindre dans le sens de dépôt (18); en ce que le boîtier cylindrique (8) présente latéralement une ouverture (9) pour le passage de la semence (3) hors du dispositif de guidage (5); et en ce que la source de fluide (13, 14) est raccordée à l'extrémité supérieure du boîtier cylindrique (8), tandis que l'endroit de stockage intermédiaire en forme d'entonnoir est disposé dans la région inférieure.

7. Semoir selon la revendication 6, caractérisé en ce que le boîtier (8) du dispositif (7) de capture et de dépôt présente, dans la région de raccordement de la source de fluide, une électrovanne (13) et une buse (21) pour la production des brèves impulsions fluides.

8. Semoir selon la revendication 6, caractérisé en ce que l'endroit de stockage intermédiaire en forme d'entonnoir présente une partie de paroi (15) ou une paroi (15) déformable élastiquement ou montée de manière pivotante.

9. Semoir selon les revendications 6 et 8, caractérisé en ce que la paroi (15) en forme d'entonnoir, ou des parties de cette paroi, est ou sont constituées par des pièces métalliques (27) disposées à la manière d'une pyramide, par un corps en caoutchouc analogue à un tuyau souple, par des pièces en fil métallique ou en tissu (25) ou similaires, ainsi que par un ressort de rappel, par exemple une bague (28) en caoutchouc.

10. Semoir selon les revendications 6, 8 ou 9, caractérisé en ce que la paroi (15) en forme d'entonnoir ou les parties de cette paroi est/sont disposées de manière détachable sur le dispositif (7) de capture et de dépôt.

11. Semoir selon les revendications 4 à 10, caractérisé en ce qu'il est prévu un dispositif de commande pour la commande synchrone du dispositif d'individualisation (1), d'une part, et du dispositif (7) de capture et de dépôt de la semence individuelle (3), d'autre part.

12. Semoir selon la revendication 11, caractérisé en ce que le dispositif de commande est agencé pour débiter les impulsions fluides de manière variable dans le temps.

13. Semoir selon les revendications 4 à 6, caractérisé en ce que le dispositif d'individualisation (1) branché en amont du dispositif (7) de capture et de dépôt de la semence individuelle (3), est entraîné par des moteurs pas à pas commandés par le dispositif de commande.

14. Semoir selon les revendications 4 à 6, caractérisé en ce que le boîtier (8) du dispositif (7) de capture et de dépôt présente, dans la région de la paroi en forme d'entonnoir, une partie rétreinte (24).

Fig.1

Fig. 2

Fig. 3

Fig. 4

Fig. 5